# EUROPEAN PATENT APPLICATION

(11) **EP 3 865 967 A1**
(43) Date of publication of application: **18.08.2021**
(21) Application number: 20382092.3
(22) Date of filing: 11.02.2020
(51) Int. Cl.: G05D 1/02

(54) **TROLLEY-BASED FOLLOWING SYSTEM**

(71) Applicant: Cart Technology, S.L., 28002 Madrid (ES)
(72) Inventor: MOHEDANO MEDINA, Alberto José, 28002 Madrid (ES); VILLARRUBIA GONZALEZ, Gabriel, 34005 Palencia (ES)
(74) Representative: Elzaburu S.L.P.

(57) **Abstract**

The trolley-based tracking system (100). The trolley (100) comprises at least two fixed beacons (101) configured to communicate by UWB technology with a mobile beacon (200) and to measure the tracking distance between the trolley (100) and the mobile beacon (200); a control module (102) is connected to the fixed beacons (101) and to the motor of at least one powered wheel (103); the trolley (100) is configured to follow the mobile beacon (200) by means of commands sent by the control module (102) to the powered wheel's motor (103); the control module (102) is configured to send an acceleration or deceleration command to the powered wheel's motor (103) in case the tracking distance is respectively greater or less than a given predetermined value.

## Description

### Purpose of the invention

The object of the present invention is a tracking system on a trolley, especially indicated to follow customers at a short distance inside shopping centres, freeing the customer from having to push the trolley and from the physical effort it entails as well as enabling the customer's hands to be free to perform other tasks while moving around the shopping area and having the peace of mind that the trolley is following his or her steps.

The implementation of a tracking system on a trolley, which is the purpose of this invention, can be particularly applied in the design, manufacture, marketing and operation of trolleys used for the transport of any type of loads, with specific application in commercial surfaces or department stores where transporting loads is frequently needed (airports, stations, hospitals, hotels, etc.).

### Background of the invention and technical problem to be solved

Some state-of-the-art trolleys are known to follow people, some of them are used to carry luggage in hotels or the items for sale in a supermarket, so that the shopper can place any selected items in the trolley and move around the supermarket hands-free, without having to push the trolley. These trolleys use image recognition technology, so that when a user prepares to use a trolley, a camera or scanner placed on it records visible biometric parameters of the user, so that the trolley is linked to a specific user based on those biometric parameters.

However, facial or other biometric recognition can be difficult or annoying for users who have to be scanned by the trolley's camera, and this can take some time that often shoppers do not have. Additionally, there are many users who are reluctant to be scanned or photographed or their biometrics recorded.

### Description of the invention

In order to solve the abovementioned drawbacks, this invention refers to a tracking system on the trolley specially indicated for its use in shopping centres.

The tracking system on the trolley, which is the object of the present invention, comprises the trolley and a mobile beacon.

The trolley includes at least two fixed beacons (also referred to as "anchors") configured to communicate with the mobile beacon (also referred to as "tag") by means of UWB technology and to measure a tracking distance between the trolley and the mobile beacon. Preferably, the trolley may use at least three fixed beacons and more preferably, it may use four fixed beacons.

The trolley includes a control module connected to the fixed beacons and with at least one powered wheel of the trolley.

The trolley is configured to follow the mobile beacon. This is achieved by means of commands sent by the control module to at least one powered wheel, wherein the control module is configured to:
- send an acceleration command to at least one motor of at least one powered wheel if the tracking distance between the trolley and the moving beacon is greater than a predetermined value, and to;
- send a deceleration command to at least one motor of at least one powered wheel in case the tracking distance between the trolley and the moving beacon is less than this predetermined value.

Thanks to the tracking system described above, the user carrying the mobile beacon can be tracked by the trolley.

In addition, the use of UWB (Ultra-Wide Band) type RTLS (Real-Time Location Systems) technology allows a high level of transmission security. The UWB signal is difficult to detect and locate because the spectral power density is below the background thermal noise. The accuracy is very high as it does not rely on the signal power to calculate the distance between transmitter and receiver, but is rather based on the time it takes for the signal from a fixed beacon to reach the mobile beacon and return from the mobile beacon to another fixed beacon. This way, an accuracy of 10 cm can be achieved at measuring distances of up to 100 m. The UWB technology makes it possible to know not only the distance, but also the direction in which the signal is located with an accuracy of about 3 degrees. In addition, the penetration capability in different materials is very high.

The trolley includes an optical sensor configured to detect objects or people near the trolley and to measure the distance between the trolley and these objects or people. The optical sensor is connected to the control module and is configured to send the distance measurements to the control module with respect to objects or people near the trolley. The control module is configured to send a command to stop or reduce the speed of at least one powered wheel if the distance measured by the optical sensor with respect to an object or person in proximity is reduced below a predetermined safety distance.

With this feature, the trolley can move and follow the user being confident that it will not collide with objects or people around the trolley.

Preferably the optical sensor is LIDAR (Laser Imaging Detection and Ranging) type.

According to one embodiment, the trolley includes a human-machine interface (HMI) configured to display information and receive instructions from a user. Through this interface, the trolley can inform the user of prices and location of products within the shop, display offers and promotions and allow the user to enter query parameters and/or configure certain parameters of the trolley).

According to a preferred embodiment, the human-machine interface may comprise a touch screen.

According to a further embodiment, the man-machine interface may be configured to allow the user to set the default value of the following distance.

### Brief description of the figures

As part of the explanation of at least one embodiment the following figures are included.
Figure 1: shows a schematic side view of an embodiment of the trolley-based tracking system.
Figure 2: shows a schematic front view of trolley-based tracking system of Figure 1.
Figure 3: shows a schematic view of the trolley-based tracking system in person-tracking position.

### Detailed description

As previously mentioned, the present invention refers to a tracking system using a trolley (100).

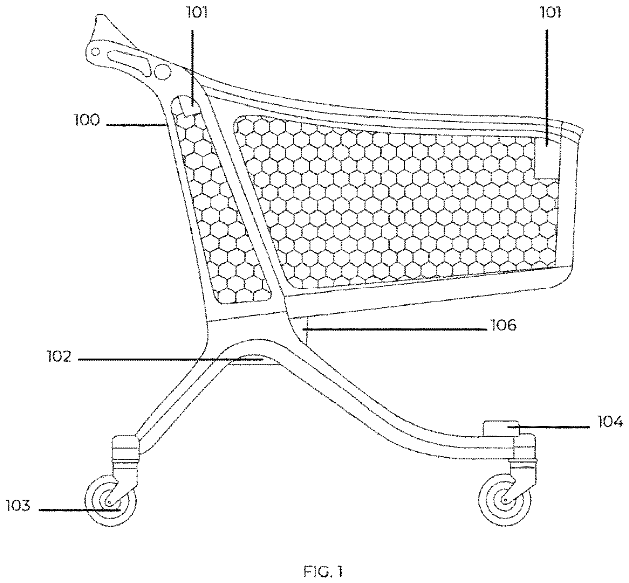

Figure 1 shows a side view of one form of an embodiment of the trolley-based tracking system (100).

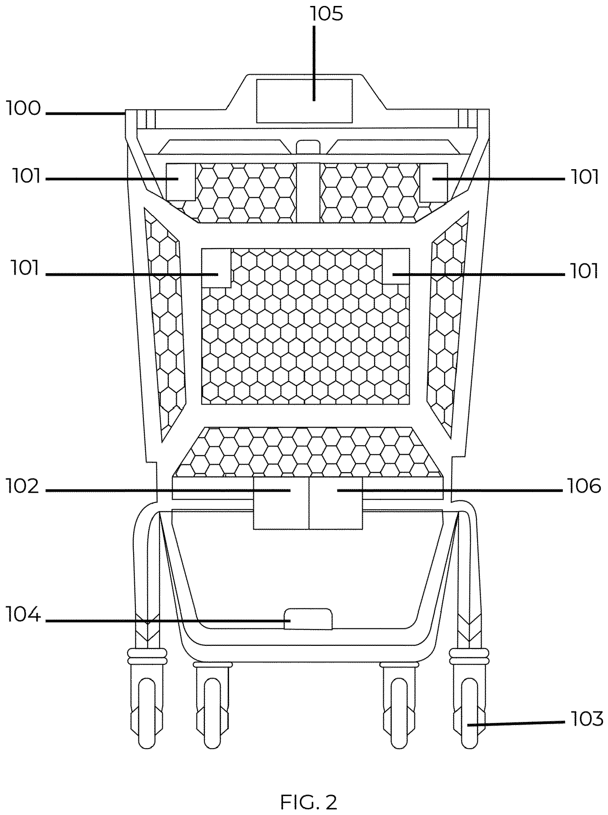

The trolley (100) includes at least one powered wheel (103), configured to pull the trolley (100) forward and backwards, and to turn the trolley (100) right and left. Preferably, the trolley (100) should include at least two powered wheels (103) (see Figure 2).

The trolley (100) is equipped with an optical sensor (104) for detecting people and objects that could interfere with the trolley's (100) path of motion. This optical sensor (104) should preferably be a LIDAR type sensor.

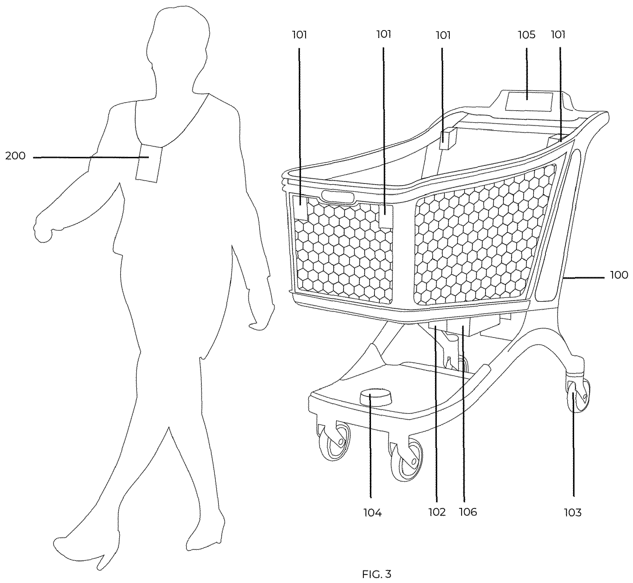

The trolley (100) includes fixed beacons (101), (e.g. RFID type), installed on the trolley (100), configured to communicate with a mobile beacon (200), (e.g. also RFID type). The mobile beacon (200) is carried by a user (e.g. a shopper in a shopping centre) so that, thanks to the communication established between the fixed beacons (101) and the mobile beacon (200), the trolley (100) can follow the user along the shopping area (see Figure 3). More preferably, both the fixed beacons (101) and the mobile beacon (200) can be based of UWB technology.

By means of the optical sensor (104), the trolley (100) can avoid colliding with objects or people during user tracking movement.

The trolley (100) includes a control module (102) configured to control the movement of the powered wheels (103). The control module (102) receives the measurements from the optical sensor (104), and if it receives a signal of an excessive proximity to an object or person from the optical sensor (104)it sends a signal to reduce speed or to stop to the motor (not shown) of the powered wheels (103).

In addition, the control module (102) controls the speed of the powered wheels' motor (103) according to the distance measured by the fixed beacons (101) from the mobile beacon (200). The control module (102) has a predetermined following distance, so that if the distance measured by the fixed beacons (101) from the mobile beacon (200) is greater than the predetermined following distance, the control module (102) sends an acceleration command to the powered wheels' motor (103). Conversely, if the distance measured by the fixed beacons (101) from the mobile beacon (200) is less than the predetermined following distance, the control module (102) sends a deceleration command to the powered wheels' motor (103).

The trolley (100) includes a human-machine interface (HMI) (105), preferably a touch screen located on the trolley (100). By means of this interface (105), the user can set different parameters such as, for example, the default distance at which the trolley must follow the user (the default following distance).

The trolley (100) includes a battery (106) for the power supply of the powered wheels motor (103), the optical sensor (104), the fixed beacons (101), the control module (102) and the HMI (105).

## Claims

1. Trolley-based tracking system (100), comprising the trolley (100) and a mobile beacon (200), wherein the trolley (100) comprises at least two fixed beacons (101) configured to communicate by UWB technology with the mobile beacon (200) and to measure a tracking distance between the trolley (100) and the mobile beacon (200), wherein the trolley comprises a control module (102) connected to the fixed beacons (101) and to at least one powered wheel motor (103) of the trolley (100), wherein the trolley (100) is configured to follow the mobile beacon (200) by means of commands sent by the control module (102) to at least one powered wheel motor (103), wherein the control module (102) is configured to:
- send an acceleration command to at least one motor of at least one powered wheel (103) if the tracking distance between the trolley (100) and the moving beacon (200) is greater than a predetermined value, and to;
- send a deceleration command to at least one motor of at least one powered wheel (103) in case the tracking distance between the trolley (100) and the moving beacon (200) is less than that predetermined value.

2. The trolley-based tracking system (100) according to claim 1, wherein the trolley (100) further comprises an optical sensor (104) configured to detect objects or people near the trolley (100) and to measure the distance between the trolley (100) and such objects or people, wherein the optical sensor (104) is connected to the control module (102) and configured to send the distance measurements of objects or people near the trolley (100) to the control module (102), wherein the control module (102) is configured to send a stop or reduced speed command to at least one motor of at least one powered wheel (103) if the distance measured by the optical sensor (104) from an object or a person nearby is reduced below a predetermined safety distance.

3. The trolley-based tracking system (100) according to claim 2, further comprising a LIDAR type optical sensor (104).

4. The trolley-based tracking system (100), according to any of the above claims, further comprising a man-machine interface (105) configured to display information and receive instructions from users.

5. The trolley-based tracking system (100), according to Claim 4, wherein the interface (105) further includes a touch screen.

6. The trolley-based tracking system (100), according to any of the claims 4 or 5, wherein the interface (105) is further configured to allow the user to enter the default value of the tracking distance.
